# EUROPÄISCHE PATENTANMELDUNG

(11) **EP 1 376 804 A1**
(43) Veröffentlichungstag der Anmeldung: **02.01.2004**
(21) Anmeldenummer: 03012756.7
(22) Anmeldetag: 05.06.2003
(51) Int. Cl.: H02G 3/18

(54) **Tragrahmen eines elektrischen Installationsgerätes**

(30) Priorität: 20.06.2002 DE 10227397
(71) Anmelder: ABB PATENT GmbH, 68526 Ladenburg (DE)
(72) Erfinder: Wheeler, David, A., P., Warton nr Tamworth B79 OJJ (GB); Delamont, Christopher, Burntwood, Staffordshire WS7 OHQ (GB)
(74) Vertreter: Miller, Toivo

(57) **Zusammenfassung**

Es wird ein Tragrahmen eines elektrischen Installationsgerätes für die Befestigung mindestens eines Einsatzes (5) vorgeschlagen, wobei der Tragrahmen (1) aus einem elektrisch isolierenden Material ausgebildet ist und wobei der Tragrahmen (1) auf seiner Rückseite mit einer ebenfalls aus einem elektrisch isolierenden Material ausgebildeten, zumindest abschnittsweise umlaufenden Schottwand (9) versehen ist.

## Beschreibung

Die Erfindung bezieht sich auf einen Tragrahmen eines elektrischen Installationsgerätes gemäß dem Oberbegriff des Anspruchs 1. Die Erfindung kann beispielsweise für Unterputz-Steckdosen, Unterputz-Schalter und Unterputz-Taster - insbesondere gemäß British Standard - verwendet werden.

Um einen Einsatz - beispielsweise einen Schalter, Taster oder eine Steckdose - in eine Unterputzdose einzubauen, ist dieser Einsatz an einem Tragring oder Tragrahmen befestigt. Die DE 199 20 653 A1 zeigt hierzu beispielhaft einen Tragring für ein elektrisches Installationsgerät zur Befestigung eines Einsatzes, welcher an abgewinkelten Laschen befestigt ist, wobei der Tragring aus zwei getrennt produzierten und miteinander verbundenen Tragringhälften gebildet ist. Die beiden Tragringhälften können miteinander vernietet, verschweißt, verlötet, verklebt oder formschlüssig verbunden sein.

Der Erfindung liegt die Aufgabe zugrunde, einen Tragrahmen eines elektrischen Installationsgerätes der eingangs genannten Art anzugeben, der auch bei sehr kompaktem Aufbau die gewünschten guten elektrischen Eigenschaften sicherstellt.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß mit Hilfe des vorgeschlagenen Tragrahmens ein sehr gedrängter bzw. kompakter Aufbau des Installationsgerätes mit relativ vielen Einsätzen möglich wird - wie dies insbesondere bei Installationsgeräten gemäß British Standard von Vorteil ist - wobei die vorgeschriebenen elektrischen Werte, wie insbesondere Schlagstrecken (Luftweiten) und Kriechstrecken (Kriechwege) auf einfache und zuverlässige Weise sichergestellt werden. Dies gilt insbesondere in denjenigen Anwendungsfällen, bei denen aus elektrisch leitfähigem Material gebildete, geerdete Unterputzdosen für die Montage der elektrischen Installationsgeräte eingesetzt werden.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Sicht auf die Frontseite eines Tragrahmens eines elektrischen Installationsgerätes mit einem montierten Einsatz,
- Fig. 2: eine Sicht auf die Rückseite eines Tragrahmens eines elektrischen Installationsgerätes.

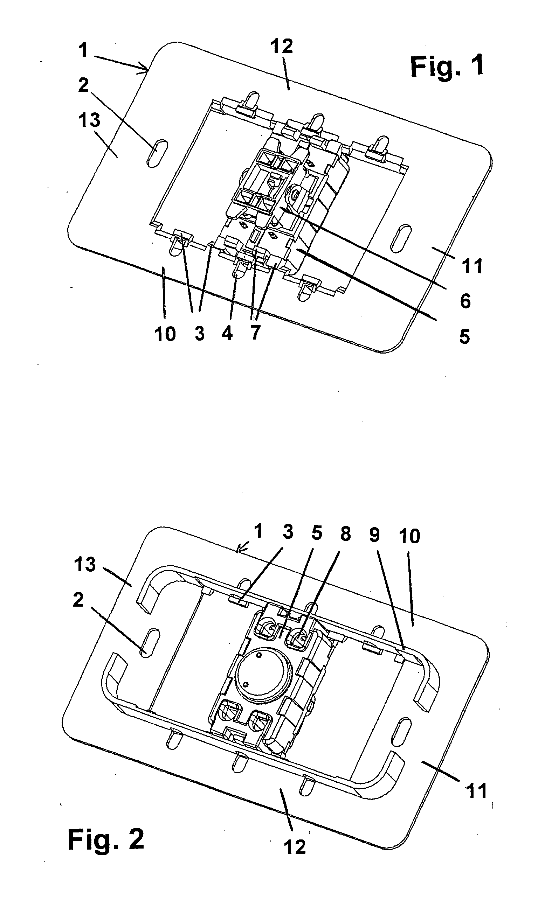

In Fig. 1 ist eine Sicht auf die Frontseite eines Tragrahmens eines elektrischen Installationsgerätes mit einem montiertem Einsatz dargestellt. Im rechteckförmig aus vier Rahmenseiten 10, 11, 12, 13 aufgebauten, aus einem elektrisch isolierenden Material ausgebildeten Tragrahmen 1 können maximal drei Einsätze befestigt werden, wobei beispielhaft lediglich ein montierter Einsatz 5 gezeigt ist, welcher beispielsweise als Schalter oder Taster ausgeführt ist und hierzu einen Kipphebel 6 aufweist. Der rechteckförmige Tragrahmen 1 dient in allgemein bekannter Weise zur Montage des Installationsgerätes in einer Unterputzdose. Hierzu weist der Tragrahmen 1 an zwei gegenüberliegenden Rahmenseiten 11,13 Ausnehmungen 2 zur Verschraubung des Tragrahmens an der beispielsweise aus einem elektrisch leitfähigen Material ausgebildeten und geerdeten Unterputzdose auf.

Die Arretierung der Einsätze 5 erfolgt, indem Rastmittel 7 der Einsätze 5 in hierzu korrespondierende Rastmittel 3 des Tragrahmens 1 eingreifen. Die Einsätze 5 können beispielsweise Arretierungs-Anschlagflächen aufweisen, die an korrespondierenden Arretierungs-Anschlagflächen des Tragrahmens 1 anliegen. Gleichzeitig können zurückfedernde Rastnasen der Einsätze 5 an den Rückseiten von Rastflächen des Tragrahmens 1 anliegen.

Zur Demontage eines Einsatzes 5 aus dem Tragrahmen 1 ist in der Nähe eines jeden Rastmittels 3 des Tragrahmens ein Schlitz 4 im Tragrahmen 1 vorgesehen Eine Demontage eines Einsatzes 5 aus dem Tragrahmen 1 ist in einfacher Weise möglich, indem ein Werkzeug (beispielsweise ein Schraubendreher mit schmaler Klinge) in diese Schlitze 4 eingeführt wird, so daß die Rastnasen der Einsätze 5 gegen die Seitenwandungen des Einsatzes gedrückt werden, wobei die Verrastung gelöst wird und der Einsatz 5 anschließend aus dem Tragrahmen 1 gezogen werden kann.

In Fig. 2 ist eine Sicht auf die Rückseite eines Tragrahmens eines elektrischen Installationsgerätes dargestellt. Es sind die zur Befestigung des elektrischen Installationsgerätes dienenden Ausnehmungen 2 des Tragrahmens 1, die zur Befestigung eines Einsatzes 5 dienenden Rastmittel 3 des Tragrahmens sowie die elektrischen Anschlußklemmen 8 des Einsatzes 5 zu erkennen. Wesentliche Komponente der Rückseite des Tragrahmens 1 ist eine zumindest abschnittsweise umlaufende Schottwand (Trennwand, Zwischenwand) 9, welche auch bei sehr gedrängtem bzw. kompaktem Aufbau des Installationsgerätes mit mehreren Einsätzen - wie dies gemäß British Standard vorteilhaft ist - die vorgeschriebenen elektrischen Werte, wie insbesondere Schlagstrecken (Luftweiten) und Kriechstrecken (Kriechwege) auf einfache Weise sichergestellt.

Im gezeigten Ausführungsbeispiel ist der Ansatz dieser zum Gehäuseinneren einer Unterputzdose hin gerichteten Schottwand 9 bei den Rahmenseiten 10, 12 genau an der Innenkante dieser Rahmenseiten des Tragrahmens 1, während die Schottwand 9 bei den Rahmenseiten 11, 13 in etwa mittig zwischen den beiden Außenkanten verläuft. Es ist jeweils eine rechtwinklige Ausrichtung der Schottwand 9 gegenüber diesen Rahmenseiten 10, 11, 12, 13 vorgesehen. Im Bereich der Ausnehmungen 2 ist die Schottwand 9 unterbrochen.

Fig. 2 zeigt klar auf, daß die Schottwand 9 quasi eine die wirksamen Schlagstrecken (Luftweiten) und Kriechstrecken (Kriechwege) verlängernde bzw. erhöhende Barriere zwischen den Einsätzen 5 mit ihren elektrisch leitenden Komponenten einerseits und den Wänden einer geerdeten Unterputzdose andererseits darstellt.

Im vorstehenden Ausführungsbeispiel ist die Variante eines drei Einsätze 5 aufnehmenden Tragrahmens 1 behandelt, der erfindungsgemäße Vorschlag ist darüber hinaus selbstverständlich auch für Varianten mit nur einem Einsatz, mit zwei Einsätzen, mit vier Einsätzen usw. verwendbar, wobei jeweils die Breite des Tragrahmens 1 bzw. die Länge der Rahmenseiten 10, 12 entsprechend der Anzahl der zu montierenden Einsätze 5 ausgebildet ist.

## Patentansprüche

1. Tragrahmen eines elektrischen Installationsgerätes für die Befestigung mindestens eines Einsatzes (5), **dadurch gekennzeichnet,**
- **daß** der Tragrahmen (1) aus einem elektrisch isolierenden Material ausgebildet ist und
- **daß** der Tragrahmen (1) auf seiner Rückseite mit einer ebenfalls aus einem elektrisch isolierenden Material ausgebildeten, zumindest abschnittsweise umlaufenden Schottwand (9) versehen ist.

2. Tragrahmen nach Anspruch 1, **dadurch gekennzeichnet, daß** der Tragrahmen (1) mit Rastmitteln (3) zur Arretierung und Verrastung von Einsätzen (5) versehen ist.

3. Tragrahmen nach Anspruch 1 und/oder 2, **dadurch gekennzeichnet, daß** der Tragrahmen (1) mit Ausnehmungen (2) zur Installation in/an einer Unterputzdose versehen ist.

4. Tragrahmen nach einem der vorstehenden Ansprüche, **dadurch gekennzeichnet, daß** zur Demontage eines Einsatzes (5) aus dem Tragrahmen (1) nahe bei den Rastmitteln (3) jeweils ein Schlitz (4) im Tragrahmen (1) vorgesehen ist.
